# FASCICULE DE BREVET EUROPEEN

(11) **EP 2 853 063 B1**
(45) Date de publication et mention de la délivrance du brevet: **24.10.2018**
(21) Numéro de dépôt: 13724569.2
(22) Date de dépôt: 17.05.2013
(51) Int. Cl.: H04L 12/28, H04L 29/12, H04L 12/741, H04L 12/933, H04L 12/935

(54) **DISPOSITIF ET PROCÉDÉ D'INTERCONNEXION DE DEUX SOUS-RÉSEAUX**
VORRICHTUNG UND VERFAHREN ZUR VERBINDUNG ZWEIER TEILNETZWERKE
DEVICE AND METHOD FOR INTERCONNECTING TWO SUBNETWORKS

(30) Priorité: 22.05.2012 FR 1254654
(43) Date de publication de la demande: 01.04.2015
(73) Titulaire: SAGEMCOM BROADBAND SAS, 92500 Rueil Malmaison (FR)
(72) Inventeur: COLIN, Stéphane, F-92500 Rueil Malmaison (FR)
(74) Mandataire: Cabinet Le Guen Maillet
(86) Numéro de dépôt international: PCT/EP2013/060283
(87) Numéro de publication internationale: WO 2013/174758

(56) Documents cités:
- US-A1- 2008 235 358
- US-A1- 2009 094 317
- US-A1- 2009 268 668
- NEC: "Discussion on requirements for digital content sharing with LIPA", 3GPP DRAFT; S1-094015, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Beijing; 20091116, 16 novembre 2009 (2009-11-16), XP050395999,
- MOTOROLA: "Enabling UPnP/DLNA multicast traffic with LIPA Solution 1", 3GPP DRAFT; S2-102569 LIPA DLNA PROXY V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto; 20100510, 4 mai 2010 (2010-05-04), XP050434700,
- OH Y-J ET AL: "The DLNA Proxy System Architecture for Sharing In-Home Media Contents via Internet", INTERNATIONAL CONFERENCE ON ADVANCED COMMUNICATION TECHNOLOGY, XX, XX, vol. 6, 20 février 2006 (2006-02-20), pages 1855-1858, XP003017690,
- STEVENS W R ED - STEVENS W R: "TCP/IP ILLUSTRATED, Vol. 1. THE PROTOCOLS - Chapter 23 - TCP Keepalive Timer", TCP/IP ILLUSTRATED. VOL. 1 : THE PROTOCOLS; [PROFESSIONAL COMPUTING SERIES], ADDISON-WESLEY, US , 1 janvier 1994 (1994-01-01), XP007908149, ISBN: 978-0-201-63346-7 Extrait de l'Internet: URL:http://www.uic.rsu.ru/doc/inet/tcp_ste vens/tcp_keep.htm [extrait le 2009-04-08]

## Description

La présente invention concerne la mise en oeuvre d'échanges selon la norme UPnP dans un cadre d'interconnexion de premier et second sous-réseaux, le premier sous-réseau étant un réseau local auquel est connectée une passerelle reliant le premier sous-réseau à un troisième sous-réseau, tel que l'Internet.

Dans le monde de la téléphonie mobile, une *femtocell* (pour femto-cellule) est une cellule d'un système cellulaire de téléphonie mobile, offrant une couverture radio limitée et généralement dédiée à un usage domestique. La station de base, appelée *femto,* en charge de gérer la femtocell se connecte au réseau de l'opérateur de téléphonie mobile via une passerelle Internet (« Internet gateway » en anglais).

Considérons des dispositifs conformes à la norme UPnP (« Universal Plug n' Play » en anglais), telle que définie dans le document « *UPnP Device Architecture 1.1* » de l'UPnP Forum en date du 15 Octobre 2008 ou une de ses évolutions. Etant donné que la passerelle Internet n'a pas connaissance de la femtocell, masquée par la femto, il n'existe pas de règle de routage permettant à un dispositif UPnP du réseau local et à un terminal mobile UPnP de la femtocell de se connaître et d'entrer en contact. En outre, comme les domaines d'adressage sont distincts entre le réseau local et la femtocell, si un dispositif UPnP du réseau local venait à adresser des trames à une adresse IP (« Internet Protocol » en anglais, tel que défini dans le document normatif RFC 791) routable sur la femtocell, cela amènerait la passerelle Internet à transférer ces trames sur l'Internet, ce qui n'est pas le comportement désiré.

Il convient de noter que la norme UPnP définit des échanges de données au format HTTP (« HyperText Transfer Protocol » en anglais, tel que défini dans le document normatif RFC 2616) qui peuvent être transportés via UDP (« User Datagram Protocol » en anglais, tel que décrit dans le document normatif RFC 768) ou via TCP (« Transmission Control Protocol » en anglais, tel que défini dans le document normatif RFC 793).

Cette problématique se pose dans le cas de deux sous-réseaux interconnectés par un dispositif d'interconnexion, lorsque que l'un de ces sous-réseaux est connecté à une passerelle n'ayant pas connaissance de l'autre sous-réseau. Cela pourrait être le cas lorsque le dispositif d'interconnexion est un pont IP et que les deux sous-réseaux sont de type LAN (« Local Area Network » en anglais). Cette problématique se pose aussi lorsque la passerelle permit l'interconnexion d'un réseau local à encore un autre sous-réseau, que ce soit l'Internet ou une autre technologie supportant les transmissions IP, telle que la passerelle L-GW décrite dans la contribution S2-102569, "Enabling UPnP/DLNA multicast traffic with LIPA Solution 1", soumise par Motorola dans le 3GPP TSG SA WG2 Meeting #79, du 10 au 14 Mai 2010 à Kyoto. On peut noter le document de brevet US 2009/0094317 A1 qui décrit un système de communication permettant de partager des contenus multimédia entre différents sous-réseaux, en s'appuyant sur le protocole UPnP.
Il est souhaitable de pallier ces différents inconvénients de l'état de la technique.
Il est plus particulièrement souhaitable de fournir une solution qui permette la découverte de services et l'échange de données entre dispositifs UPnP situés de part et d'autre d'une femto. Il est aussi souhaitable de fournir une solution qui permette de ne pas modifier le protocole UPnP pour ces besoins, et qui permette de conserver le comportement actuel des passerelles, telles que les passerelles Internet.

L'invention concerne un procédé selon la revendication 1.

La
mise en oeuvre de cette double connexion dans laquelle le dispositif d'interconnexion joue le rôle de relais, et de ces remplacements de couples adresses IP et numéros de ports, permet la découverte de services et l'échange de données entre dispositifs UPnP situés de part et d'autre du dispositif d'interconnexion. En outre, le protocole UPnP n'a pas à être modifié et le comportement actuel des passerelles, telles que les passerelles Internet, est conservé.

Selon
un mode de réalisation particulier, le dispositif d'interconnexion s'abonne au préalable, sur chacun des premier et second sous-réseaux, à une adresse IP et un numéro de port prédéfinis auxquels sont adressés les datagrammes UDP multicast transmis lors de la phase de découverte UPnP, et se met à l'écoute de datagrammes UDP transmis à destination de ladite adresse IP du dispositif d'interconnexion et du numéro de port attribué par le dispositif d'interconnexion audit serveur. Sont alors concernés les datagrammes UDP multicast ainsi que les datagrammes UDP unicast qui constituent les réponses à ces datagrammes UDP multicast.

Selon un mode de réalisation particulier, le dispositif d'interconnexion détermine les adresses IP et numéros de port effectifs de serveurs, à partir de trames HTTP transportées par des trames TCP reçues par le dispositif d'interconnexion via lesdites connexions.

Selon un mode de réalisation particulier, le dispositif d'interconnexion effectue les étapes suivantes : vérifier si le numéro de port effectif d'un serveur est déjà attribué par le dispositif d'interconnexion à un autre serveur ; attribuer au serveur le même numéro de port que ledit numéro de port effectif, en cas de vérification positive ; attribuer au serveur un autre numéro de port, sinon.

Selon un mode de réalisation particulier, le dispositif d'interconnexion analyse un en-tête HTTP dans les trames reçues par le dispositif d'interconnexion via une desdites connexions, et le dispositif d'interconnexion n'effectue de modification de trame que si le champ CONTENT-TYPE de l'en-tête HTTP est de type texte.

Selon un mode de réalisation particulier, le dispositif d'interconnexion analyse un en-tête HTTP dans les trames reçues par le dispositif d'interconnexion via une desdites connexions, et, si le champ HOST est présent dans l'en-tête HTTP, le dispositif d'interconnexion effectue les étapes suivantes : si l'adresse IP contenue dans le champ HOST est une adresse de serveur, remplacer ladite adresse IP par une adresse IP du dispositif d'interconnexion, utilisable pour router les données sur l'autre sous-réseau que celui auquel ledit serveur est connecté parmi lesdits premier et second sous-réseaux ; et si l'adresse IP contenue dans le champ HOST est une adresse IP du dispositif d'interconnexion, remplacer ladite adresse IP par l'adresse IP du serveur avec lequel une dite connexion est établie et qui est connecté sur l'autre sous-réseau que celui duquel lesdites trames sont reçues parmi lesdits premier et second sous-réseaux.

Selon un mode de réalisation particulier, après avoir établi lesdites connexions, le dispositif d'interconnexion effectue les étapes suivantes : activer une temporisation de durée prédéfinie ; vérifier si au moins une trame est reçue par le dispositif d'interconnexion via au moins l'une desdites connexions ; et fermer lesdites connexions lorsqu'aucune trame n'a été reçue par le dispositif d'interconnexion via au moins l'une desdites connexions avant expiration de ladite temporisation.

Selon un mode de réalisation particulier, le dispositif d'interconnexion ferme en outre lesdites connexions lorsque ledit dispositif d'interconnexion reçoit, via l'une des connexions, une requête de fermeture de connexion pour ladite connexion.

L'invention concerne également un dispositif d'interconnexion selon la revendication 9.

Selon
un mode de réalisation particulier, le dispositif d'interconnexion comporte : un module assistant de découverte adapté pour analyser et modifier des datagrammes UDP transmis par des serveurs lors d'une phase de découverte UPnP ; un module de translation d'adresses adapté pour analyser et modifier des trames HTTP transmises par des serveurs via lesdites connexions.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau de communication dans lequel l'invention peut être mise en oeuvre ;
- la Fig. 2 illustre schématiquement un exemple d'architecture d'une femto du réseau de communication ;
- la Fig. 3 illustre schématiquement un algorithme, mis en oeuvre par la femto, de découverte de serveurs HTTP ;
- la Fig. 4 illustre schématiquement un algorithme, mis en oeuvre par la femto, de modification de trames HTTP transmises via des connexions TCP ;
- la Fig. 5 illustre schématiquement un algorithme, mis en oeuvre par la femto, pour obtenir un numéro de port attribué par la femto à partir d'une adresse IP et un numéro de port qui correspondent à un serveur HTTP ;
- la Fig. 6 illustre schématiquement un algorithme, mis en oeuvre par la femto, pour obtenir une adresse IP et un numéro de port qui correspondent à un serveur HTTP, à partir d'un numéro de port attribué par la femto.

Par la suite, une mise en oeuvre de l'invention est présentée dans le cadre d'une interconnexion entre un premier sous-réseau de type LAN et un second sous-réseau 102 de type *femto-cellule* ou *femtocell,* une passerelle Internet étant connectée au premier sous-réseau. Comme déjà mentionné, une variation non couverte par les revendications mais utile pour comprendre l'invention peut également être mise en oeuvre dans le cadre d'une interconnexion entre des premier et second sous-réseaux, par exemple tout deux de type LAN, une passerelle reliant un des sous-réseau à un troisième sous-réseau assurant le routage de paquets au niveau IP et n'ayant pas connaissance de l'autre sous-réseau parmi les premier et second sous-réseaux.

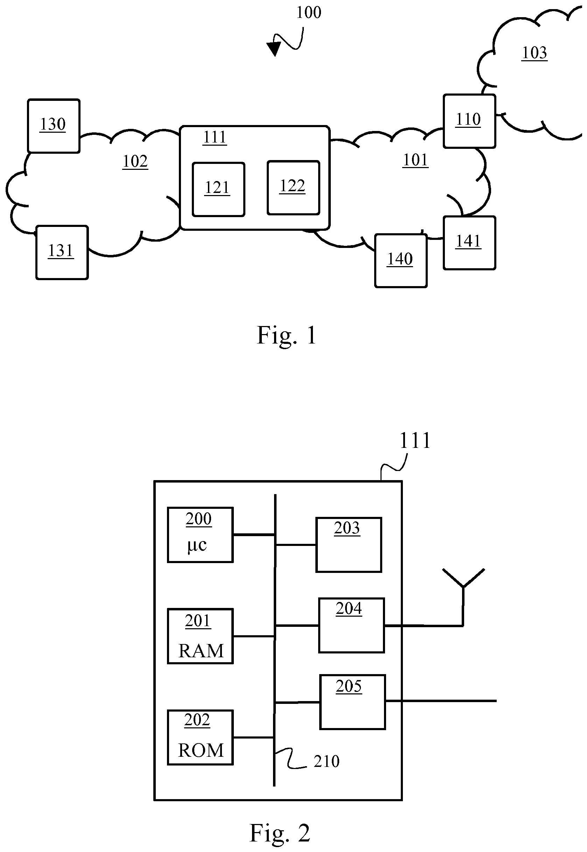

La Fig. 1 illustre schématiquement un réseau de communication 100 dans lequel l'invention peut être mise en oeuvre. Le réseau de communication 100 comporte un premier sous-réseau 101 de type LAN et un second sous-réseau 102 de type femtocell. Les premier 101 et second 102 sous-réseaux sont interconnectés par une station de base 111, en charge de gérer le second sous-réseau 102. La station de base 111 est donc un dispositif d'interconnexion entre les premier 101 et second 102 sous-réseaux. La station de base 111 est appelée par la suite *femto,* le premier sous-réseau est appelé *LAN* et le second sous-réseau *femtocell*.

Le LAN 101 est par exemple un réseau conforme à la norme Ethernet, telle que définie par le standard IEEE 802.3, ou à la norme WiFi, telle que définie par le standard IEEE 802.11.

Une passerelle Internet 110 est connectée au LAN 101 et permet l'interconnexion du LAN 101 avec l'Internet 103. La passerelle Internet 110 assure le routage des paquets IP entre le LAN 101 et l'Internet 103. Elle assure en outre de préférence la fonction de configuration dynamique des hôtes IP par le biais du protocole DHCP (« Dynamic Host Configuration Protocol » en anglais, tel que défini dans le document normatif RFC 1531 et ses évolutions).

Au LAN 101 est en outre connecté au moins un dispositif 140, 141 mettant en oeuvre la norme UPnP. Préférentiellement, le dispositif 140 est un point de contrôle UPnP (« UPnP control point » en anglais).

A la femtocell 102 est connecté au moins un terminal mobile 130, 131 mettant aussi en oeuvre la norme UPnP.

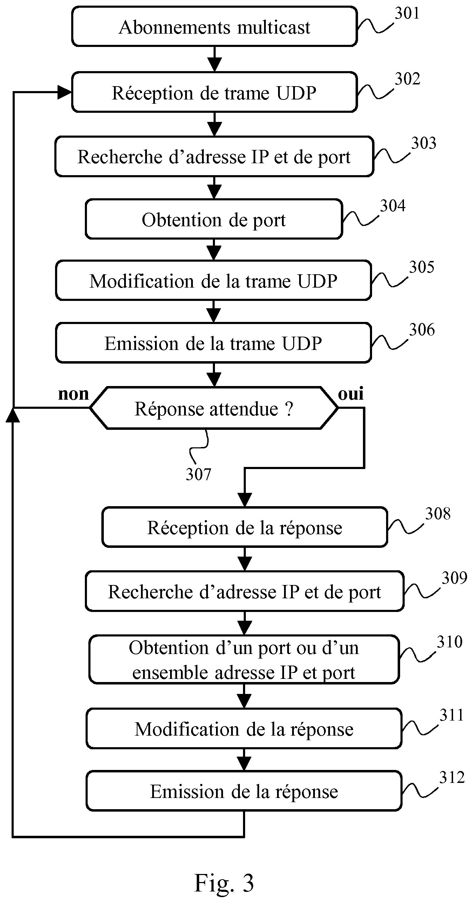

La femto 111 comporte un premier module 121, appelé *assistant de découverte,* permettant aux dispositifs UPnP connectés au LAN 101 de découvrir les terminaux mobiles UPnP connectés à la femtocell 102 et leurs services UPnP, et vice versa. La femto 111 comporte un second module 122, appelé *NAT HTTP* (où NAT signifie « Network Address Translator » en anglais ou « Traducteur d'Adresse Réseau » en français), permettant d'assurer la communication entre les dispositifs UPnP connectés au LAN 101 et les terminaux mobiles UPnP connectés à la femtocell 102, et vice versa. Le terme NAT HTTP vient du fait que la translation d'adresse s'effectue au niveau transport, mais aussi au niveau HTTP. Le comportement de l'assistant de découverte 121 et du NAT HTTP 122 est détaillé ci-après en relation avec les Figs. 3 à 6.

La Fig. 2 illustre schématiquement un exemple d'architecture de la femto 111. La femto 111 comprend alors, reliés par un bus de communication 210 : un processeur ou CPU (« Central Processing Unit » en anglais) 200 ; une mémoire vive RAM (« Random Access Memory » en anglais) 201 ; une mémoire morte ROM (« Read Only Memory » en anglais) 202 ; une unité de stockage ou un lecteur de support de stockage, tel qu'un disque dur HDD (« Hard Disk Drive » en anglais) 203 ; une interface de communication 204 permettant de créer la femtocell 102 et de communiquer avec les terminaux mobiles 130, 131 ; et une interface de communication 205 permettant la connexion avec le LAN 101 et de communiquer avec les dispositifs 140, 141.

Le processeur 200 est capable d'exécuter des instructions chargées dans la RAM 201 à partir de la ROM 202, d'une mémoire externe (non représentée), d'un support de stockage, tel que le disque dur HDD 203, ou d'un réseau de communication. Lorsque la femto 111 est mise sous tension, le processeur 200 est capable de lire de la RAM 201 des instructions et de les exécuter. Ces instructions forment un programme d'ordinateur causant la mise en oeuvre, par le processeur 200, de tout ou partie des algorithmes décrits ci-après. Tout ou partie des algorithmes décrits ci-après peut être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement un algorithme, mis en oeuvre par la femto 111, de découverte de serveurs HTTP. Dans le cadre de la Fig. 1, l'algorithme est plus particulièrement mis en oeuvre par l'assistant de découverte 121.

Dans une étape 301, l'assistant de découverte 121 s'abonne, à la fois sur femtocell 102 et le LAN 101, à l'adresse multicast IP et au port à destination desquels les dispositifs UPnP envoient des messages de découverte. Selon la norme UPnP, cette adresse IP est 239.255.255.250 et le numéro de port est 1900. Ainsi, lorsqu'un dispositif UPnP connecté à la femtocell 102 ou au LAN 101 initie une phase de découverte, l'assistant de découverte 121 reçoit chaque trame UDP correspondante. En effet, selon la norme UPnP, les trames relatives à la découverte sont transmises grâce au protocole SSDP (« Simple Service Discovery Protocol » en anglais), c'est-à-dire au format HTTP encapsulé dans des datagrammes UDP.

Dans un mode de réalisation particulier, l'assistant de découverte 121 effectue ces abonnements, à la fois sur femtocell 102 et le LAN 101, lorsque la femto 111 détecte la présence d'un terminal mobile UPnP dans la femtocell 102.

Dans une étape 302 suivante, l'assistant de découverte 121 reçoit une trame UDP multicast destinée à l'adresse IP 239.255.255.250 et au port de numéro 1900.

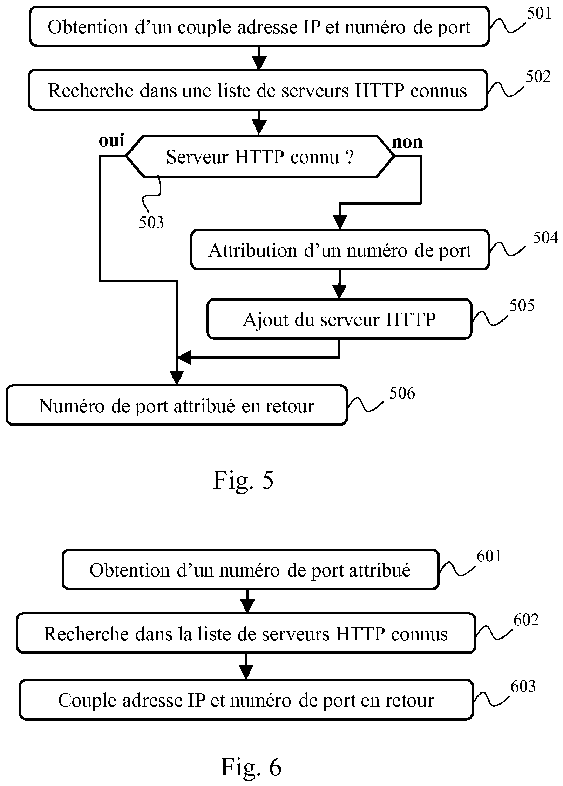

Dans une étape 303 suivante, l'assistant de découverte 121 effectue une recherche de serveur HTTP dans la trame reçue. L'assistant de découverte 121 scanne alors la trame UDP reçue pour détecter des adresses IP de dispositifs appartenant au sous-réseau, femtocell 102 ou LAN 101, à partir duquel elle a été émise. L'assistant de découverte 121 analyse en particulier le champ LOCATION. Si l'adresse IP est accompagnée d'un port, un serveur HTTP est détecté et l'ensemble formé par cette adresse IP et ce numéro de port est fourni au NAT HTTP 122. Le NAT HTTP 122 retourne alors un numéro de port, que l'assistant de découverte 121 obtient dans une étape 304 suivante. L'attribution d'un numéro de port par le NAT HTTP 122 est décrite ci-après en relation avec la Fig. 5.

Dans une étape 305 suivante, l'assistant de découverte 121 modifie la trame UDP reçue en remplaçant l'adresse IP et le numéro de port du serveur HTTP détecté par respectivement une adresse IP de la femto et le numéro de port fourni par le NAT HTTP 122. Cette adresse IP de la femto est celle attribuée à la femto sur l'autre sous-réseau, fcmtoccll 102 ou LAN 101, que celui où est connecté le serveur HTTP détecté. En effet, la femto 11 possède deux adresses IP, l'une utilisée pour le routage des trames IP dans la femtocell 102 et l'autre utilisée pour le routage des trames IP dans le LAN 101. Les étapes 303 à 305 sont réitérées jusqu'à ce que la trame reçue soit complètement parcourue.

Dans une étape 306 suivante, l'assistant de découverte 121 émet la trame UDP modifiée sur l'autre sous-réseau, femtocell 102 ou LAN 101, c'est-à-dire le sous-réseau qui n'est pas celui à partir duquel elle a été reçue à l'étape 302.

Dans une étape 307 suivante, l'assistant de découverte 121 détermine si la trame UDP reçue à l'étape 305 nécessite une réponse. Tel est le cas des messages de recherche (« search messages » en anglais selon la norme UPnP, aussi appelés messages M-SEARCH). Si tel est le cas, une étape 308 est effectuée, sinon l'assistant de découverte 121 se met en attente d'une nouvelle trame UDP multicast et l'étape 302 est réitérée.

Dans l'étape 308, l'assistant de découverte 121 se met à l'écoute de datagrammes UDP transmis à destination de l'adresse IP de la femto 111 et du numéro de port attribué au serveur HTTP, et reçoit la réponse attendue. L'assistant de découverte 121 effectue alors, dans une étape 309 suivante, une recherche de serveur HTTP dans la réponse reçue. L'assistant de découverte 121 scanne la réponse reçue pour détecter des adresses IP de dispositifs. Si l'adresse IP n'est pas une adresse IP de la femto 111 et est accompagnée d'un port, un serveur HTTP est détecté et l'ensemble formé par cette adresse IP et ce numéro de port est fourni au NAT HTTP 122. Le NAT HTTP 122 retourne alors un numéro de port, que l'assistant de découverte 121 obtient dans une étape 310 suivante. Si l'adresse IP est une adresse IP de la femto 111, cette adresse IP et le numéro de port qui lui est associé dans la réponse sont fournis au NAT HTTP 122. Le NAT HTTP 122 fournit en retour l'ensemble formé par l'adresse IP et le numéro de port effectifs du serveur HTTP.

Dans une étape 311 suivante, l'assistant de découverte 121 modifie la réponse reçue en remplaçant l'adresse IP et le numéro de port du serveur HTTP détecté par respectivement l'adresse IP de la femto 111, qui est utilisée pour le routage des trames IP sur l'autre sous-réseau que celui auquel est connecté le serveur HTTP détecté, et le numéro de port fourni par le NAT HTTP 122, ou en remplaçant l'adresse IP de la femto 111 et le numéro de port associé par respectivement l'adresse IP et le numéro de port effectifs du serveur HTTP. Les étapes 309 à 311 sont réitérées jusqu'à ce que la réponse reçue soit complètement parcourue.

Dans une étape 312 suivante, l'assistant de découverte 121 émet la réponse modifiée sur l'autre sous-réseau, femtocell 102 ou LAN 101, c'est-à-dire le sous-réseau qui n'est pas celui à partir duquel elle a été reçue à l'étape 308. L'assistant de découverte 121 se met alors en attente d'une nouvelle trame UDP multicast et l'étape 302 est réitérée.

De cette manière une phase de découverte initiée sur un des sous-réseaux, femtocell 102 ou LAN 101, est étendue par la femto 111 à l'autre sous-réseau. En remplaçant les ensembles formés par les adresses IP et les numéros de port des dispositifs d'un sous-réseau par l'adresse IP adéquate de la femto 111 et des numéros de port attribués par la femto 111, chaque service UPnP est vu de l'autre côté de la femto 111 comme s'il était mis en oeuvre par la femto 111.

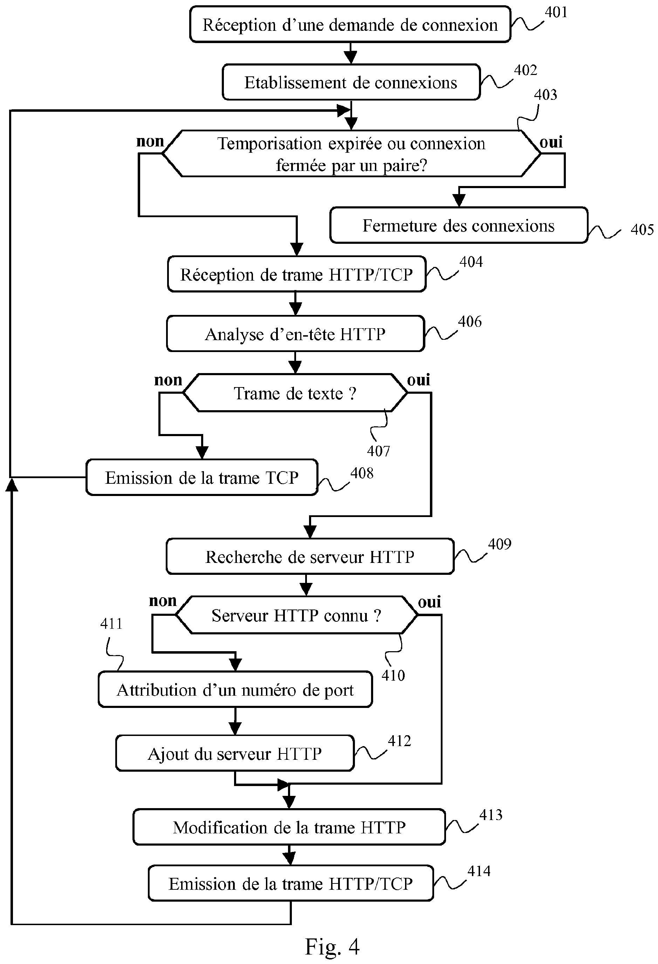

La Fig. 4 illustre schématiquement un algorithme, mis en oeuvre par la femto 111, de modification de trames HTTP échangées dans le cadre de la norme UPnP via des connexions TCP. Dans le cadre de la Fig. 1, l'algorithme est plus particulièrement mis en oeuvre par le NAT HTTP 122.

Dans une étape 401, le NAT HTTP 122 reçoit une demande de connexion TCP depuis un dispositif ou point de contrôle UPnP présent sur l'un des sous-réseaux, femtocell 102 ou LAN 101. En effet, en dehors de la phase de découverte, les messages échangés dans le cadre de la norme UPnP utilisent le protocole TCP/IP. Cette demande de connexion est adressée à la femto et précise un numéro de port. Le NAT HTTP 122 retrouve alors le serveur HTTP auquel ce numéro de port a été précédemment affecté, ce qui lui indique le serveur HTTP effectivement adressé.

Dans une étape 402 suivante, le NAT HTTP 122 établit des connexions avec les dispositifs UPnP de chaque côté de la femto. En d'autres termes, une première connexion TCP est établie entre le dispositif UPnP requérant et la femto 111, et une seconde connexion TCP est établie entre la femto 111 et le serveur HTTP effectivement adressé, la femto 111 effectuant un relais entre ces connexions TCP. Pour le NAT HTTP 122 ces connexions sont associées l'une à l'autre.

Dans une étape 403 suivante, le NAT HTTP 122 démarre une temporisation, d'une durée prédéfinie, et se met en attente de trames TCP. Si aucune trame TCP n'est reçue par le NAT HTTP 122 à l'expiration de cette temporisation, le NAT HTTP 122 ferme les deux connexions associées dans le cadre du relais TCP dans une étape 405. Ainsi, seules les connexions TCP effectivement utiles sont maintenues. Il en va de même si le NAT HTTP 122 reçoit une requête de fermeture de connexion de la part du point de contrôle UPnP ou du serveur HTTP. Il est alors mis fin à l'algorithme. Sinon, au moins une trame TCP étant alors reçue, le NAT HTTP 122 effectue une étape 404.

Dans l'étape 404 suivante, le NAT HTTP 122 reçoit une trame TCP du dispositif UPnP 140 ou du terminal mobile UPnP 130, et dans une étape 406 suivante, le NAT HTTP 122 analyse cette trame TCP pour savoir s'il s'agit de la première trame TCP d'une trame HTTP. Si c'est le cas, le NAT HTTP 122 reçoit des trames TCP jusqu'à avoir récupéré l'intégralité de l'en-tête HTTP. Le NAT HTTP 122 analyse cet en-tête pour déterminer si le champ CONTENT-TYPE indique une extension MIME (« Multipurpose Internet Mail Extensions » en anglais) de type « text » (« texte » en français). En effet, le champ CONTENT-TYPE des messages échangés dans le cadre de la norme UPnP indique une extension MIME de type « text ». Cela permet de ne pas scruter, dans le cadre de la modification des adresses IP et ports associés, des trames non concernées par la norme UPnP, et donc de préserver les ressources du NAT HTTP 122. Ainsi, dans une étape 407 suivante, le NAT HTTP 122 vérifie si le champ CONTENT-TYPE indique une extension MIME de type « text ». Si tel est le cas, une étape 409 est effectuée ; sinon une étape 408 est effectuée.

Dans l'étape 408, le NAT HTTP 122 retransmet les données des trame TCP reçues sur l'autre sous-réseau sans apporter de modification. La trame HTTP pouvant être reçue sur plusieurs trames TCP, l'ensemble des données de ces trames est retransmis sans modification sur l'autre réseau. Le NAT HTTP 122 se met ensuite en attente de nouvelles données et l'étape 403 est réitérée.

Dans l'étape 409, le NAT HTTP 122 récupère l'intégralité de la trame HTTP, qui peut être reçue via plusieurs trames TCP. Le champ CONTENT-LENGTH permet au NAT HTTP 122 de déterminer la taille de la trame HTTP. Le NAT HTTP 122 effectue une recherche de serveur HTTP dans la trame HTTP récupérée. Le NAT HTTP 122 scanne la trame HTTP reçue pour détecter des adresses IP de dispositifs. Si l'adresse IP est une adresse IP de la femto 111, cette adresse IP et le numéro de port qui lui est associé dans la trame HTTP reçue permet au NAT HTTP 122 de retrouver l'ensemble formé par l'adresse IP et le numéro de port effectifs du serveur HTTP. Si l'adresse IP n'est pas une adresse IP de la femto 111 et est accompagnée d'un port, un serveur HTTP est détecté. Le NAT HTTP 122 détermine alors, dans une étape 410 suivante, si cc serveur HTTP est déjà connu, c'cst-à-dirc s'il a par exemple été préalablement détecté par l'assistant de découverte 121. Si le serveur HTTP est déjà connu du NAT HTTP 122, une étape 413 est effectuée, sinon une étape 411 est effectuée.

Dans l'étape 411, le NAT HTTP 122 attribue un numéro de port au serveur HTTP détecté et l'ajoute, dans une étape 412, à une liste de serveurs HTTP connus, en correspondance avec le numéro de port attribué et avec l'adresse IP de la femto 111 utilisable sur l'autre sous-réseau que celui auquel le serveur HTTP est connecté. Cela permet de faire la découverte des dispositifs UPnP directement lors des échanges de données via le protocole HTTP transporté dans les trames TCP. L'étape 413 est ensuite effectuée.

Dans l'étape 413, le NAT HTTP 122 modifie la trame HTTP reçue en remplaçant l'adresse IP et le numéro de port du serveur HTTP détecté par respectivement l'adresse IP de la femto 111, utilisable sur l'autre sous-réseau que celui auquel le serveur HTTP est connecté, et le numéro de port fourni par le NAT HTTP 122, ou en remplaçant l'adresse IP de la femto 111 et le numéro de port associé par respectivement l'adresse IP et le numéro de port effectifs du serveur HTTP. Les étapes 409 à 413 sont réitérées jusqu'à ce que la trame HTTP reçue soit complètement parcourue.

Un cas particulier concerne le champ HOST de l'en-tête HTTP, car celui-ci contient une adresse IP mais pas de port. Le NAT HTTP 122 le traite alors de la façon suivante. S'il s'agit d'une adresse IP d'un dispositif UPnP ou d'un terminal mobile UPnP sur l'un des sous-réseaux, elle est remplacée par l'adresse IP de la femto 111 routable sur l'autre sous-réseau. S'il s'agit d'une adresse IP de la femto, elle est remplacée par celle du serveur HTTP concerné. Le NAT HTTP 122 n'a dans ce cas pas besoin du numéro de port, car le champ HOST ne peut que représenter l'un des dispositifs des connexions TCP associées. Si l'adresse IP contenue dans le champ HOST est une adresse de serveur HTTP, le NAT HTTP 122 la remplace par une adresse IP du dispositif d'interconnexion, utilisable pour router les données sur l'autre sous-réseau que celui auquel ledit serveur HTTP est connecté. Et, si l'adresse IP contenue dans le champ HOST est une adresse IP de la femto 111, le NAT HTTP 122 la remplace par l'adresse IP du serveur avec lequel une connexion est établie et qui est connecté sur l'autre sous-réseau que celui duquel la trame HTTP est reçue.

Suite aux modifications apportées à la trame HTTP, le champ CONTENT-LENGTH peut devoir être modifié pour être représentatif de la nouvelle taille de la trame HTTP.

Dans une étape 414 suivante, le NAT HTTP 122 émet la trame HTTP modifiée sur l'autre sous-réseau, femtocell 102 ou LAN 101, c'est-à-dire le sous-réseau qui n'est pas celui à partir duquel la trame HTTP a été reçue à l'étape 404. La trame HTTP est transportée via le protocole TCP, grâce à la connexion existante entre la femto 111 et le dispositif UPnP ou le terminal mobile UPnP sur l'autre sous-réseau. Le NAT HTTP 122 se met alors en attente de nouvelles données et l'étape 403 est réitérée.

La Fig. 5 illustre schématiquement un algorithme, mis en oeuvre par la femto 111, pour obtenir un numéro de port attribué par la femto 111 à partir d'une adresse IP et un numéro de port effectifs d'un serveur HTTP. Dans le cadre de la Fig. 1, l'algorithme est plus particulièrement mis en oeuvre par le NAT HTTP 122.

Dans une étape 501, le NAT HTTP 122 obtient un ensemble formé d'une adresse IP et un numéro de port effectifs d'un serveur HTTP. Ces informations sont fournies par l'assistant de découverte 121 à l'étape 303 ou à l'étape 309, ou obtenues par le NAT HTTP 122 à l'étape 409.

Dans une étape 502 suivante, le NAT HTTP 122 recherche si ce serveur HTTP est répertorié dans une liste de serveurs HTTP connus du NAT HTTP 102. Cette liste comporte les couples d'adresses IP et numéros de port des serveurs HTTP connus du NAT HTTP 102, en correspondance avec un numéro de port que le NAT HTTP 102 leur a attribué et l'adresse IP de la femto 111 utilisable sur l'autre sous-réseau que celui sur lequel le serveur HTTP est connecté.

Dans une étape 502 suivante, le NAT HTTP 122 détermine si le serveur HTTP est connu. Si ce n'est pas le cas, une étape 504 est effectuée ; sinon, une étape 506 est effectuée.

Dans l'étape 504, le NAT HTTP 122 attribue un numéro de port au serveur HTTP. Par exemple, le NAT HTTP 122 conserve le numéro de port du serveur HTTP si celui-ci n'est pas déjà attribué à un autre serveur HTTP qui est sur le même sous-réseau et qui est présent dans la liste des serveurs HTTP connus du NAT HTTP 122 ; sinon, le NAT HTTP 122 attribue un autre numéro de port, qui n'est pas déjà attribué à un serveur HTTP qui est sur le même sous-réseau et qui est présent dans la liste.

Dans une étape 505 suivante, le NAT HTTP 122 ajoute le serveur HTTP à la liste des serveurs HTTP connus du NAT HTTP 122, c'est-à-dire que le NAT HTTP 122 stocke l'adresse IP et le numéro de port effectifs du serveur HTTP, en correspondance avec le numéro de port attribué par le NAT HTTP 122 et l'adresse IP de la femto 111 utilisable sur l'autre sous-réseau que celui sur lequel le serveur HTTP est connecté. L'étape 506 est ensuite effectuée.

Dans l'étape 506, le NAT HTTP 122 retourne au moins le numéro de port que le NAT HTTP 122 a attribué au serveur HTTP.

La Fig. 6 illustre schématiquement un algorithme, mis en oeuvre par la femto 111, pour obtenir une adresse IP et un numéro de port effectifs d'un serveur HTTP, à partir d'un numéro de port attribué par la femto 111 et d'une adresse IP de la femto 111. Dans le cadre de la Fig. 1, l'algorithme est plus particulièrement mis en oeuvre par le NAT HTTP 122.

Dans une étape 601, le NAT HTTP 122 obtient un numéro de port que le NAT HTTP 122 a précédemment attribué à un serveur HTTP, ainsi que l'adresse IP de la femto 111 à laquelle ce port est associé. Ces informations sont fournies par l'assistant de découverte 121 à l'étape 309, ou obtenues par le NAT HTTP 122 à l'étape 409.

Dans une étape 602 suivante, le NAT HTTP 122 recherche quel serveur HTTP est répertorié dans la liste des serveurs HTTP connus du NAT HTTP 122 en correspondance avec cette adresse IP de la femto 111 et ce numéro de port attribué par le NAT HTTP 122.

Dans une étape 603 suivante, le NAT HTTP 122 retourne l'ensemble formé de l'adresse IP et du numéro de port effectifs du serveur HTTP, tel que répertorié dans la liste des serveurs HTTP connus du NAT HTTP 122.

## Revendications

1. Procédé d'interconnexion de premier et second sous-réseaux, ledit premier sous-réseau étant un réseau local (101) sur lequel est connectée une passerelle internet reliant ledit premier sous-réseau à un troisième sous-réseau (110), ledit second sous-réseau étant une femto-cellule (102), lesdits premier et second sous-réseaux étant adaptés pour permettre d'y connecter des dispositifs UPnP (130 ; 140), chaque dispositif UPnP comportant au moins un serveur associé à une adresse IP et un numéro de port, le procédé étant tel qu'un dispositif d'interconnexion (111) interconnectant lesdits premier et second sous-réseaux effectue les étapes préalables suivantes lorsque le dispositif d'interconnexion détecte la présence d'un terminal mobile UPnP dans la femto-cellule :
- s'abonner, sur chacun des premier et second sous-réseaux, à une adresse IP et un numéro de port prédéfinis auxquels sont adressés des datagrammes UDP multicast transmis lors d'une phase de découverte UPnP, et
- se mettre à l'écoute de datagrammes UDP transmis à destination de ladite adresse IP du dispositif d'interconnexion et du numéro de port attribué par le dispositif d'interconnexion audit serveur ;
puis ; suite à la mise en oeuvre des étapes préalables, le dispositif d'interconnexion effectue:
- déterminer (303 ; 309 ; 409), pour lesdits premier et second sous-réseaux, des adresses IP et numéros de port effectifs de serveurs de dispositifs UPnP ;
- attribuer (504) un numéro de port à chacun desdits serveurs ;
- établir (402), sur réception d'une requête de connexion correspondant à un numéro de port attribué par le dispositif d'interconnexion à un dit serveur, une connexion entre le dispositif d'interconnexion et ledit serveur, et une connexion entre le dispositif d'interconnexion et le dispositif UPnP ayant émis ladite requête ;
et dans au moins une trame, reçue par le dispositif d'interconnexion via une desdites connexions :
- remplacer (413) dans ladite trame chaque adresse IP et numéro de port effectifs de serveur appartenant au sous-réseau d'émission de ladite trame par une adresse IP du dispositif d'interconnexion, utilisable pour router les données sur l'autre sous-réseau que celui auquel ledit serveur est connecté parmi lesdits premier et second sous-réseaux, et le numéro de port attribué par le dispositif d'interconnexion audit serveur, et
- remplacer (413) dans ladite trame chaque adresse IP du dispositif d'interconnexion utilisable sur le sous réseau d'émission de ladite trame et numéro de port attribué par le dispositif d'interconnexion à un serveur par l'adresse IP et le numéro de port du serveur correspondant ; et
- transmettre (414) ladite trame ainsi modifiée sur un sous-réseau choisi parmi les premier et second sous-réseaux, le sous-réseau choisi étant celui par lequel le dispositif d'interconnexion n'a pas reçu ladite trame.

2. Procédé d'interconnexion selon la revendication 1, **caractérisé en ce que** le dispositif d'interconnexion détermine les adresses IP et numéros de port effectifs de serveurs, à partir de datagrammes UDP transmis par des dits serveurs lors d'une phase de découverte UPnP, et **en ce que**, pour chaque dit datagramme UDP, le dispositif d'interconnexion effectue les étapes suivantes :
- remplacer (305 ; 311) chaque adresse IP et numéro de port effectifs de serveur appartenant au sous réseau d'émission dudit datagramme UDP par une adresse IP du dispositif d'interconnexion, utilisable pour router les données sur l'autre sous-réseau que celui auquel ledit serveur est connecté parmi lesdits premier et second sous-réseaux, et le numéro de port attribué par le dispositif d'interconnexion audit serveur,
- remplacer (305 ; 311) chaque adresse IP du dispositif d'interconnexion utilisable sur le sous réseau d'émission dudit datagramme UDP et numéro de port attribué par le dispositif d'interconnexion à un serveur par l'adresse IP et le numéro de port du serveur correspondant, et
- transmettre (306) chaque datagramme UDP ainsi modifié sur un sous-réseau choisi parmi les premier et second sous-réseaux, le sous-réseau choisi étant celui par lequel le dispositif d'interconnexion n'a pas reçu ledit datagramme UDP.

3. Procédé d'interconnexion selon la revendication 1 ou 2, **caractérisé en ce que** le dispositif d'interconnexion détermine (409) les adresses IP et numéros de port effectifs de serveurs, à partir de trames HTTP transportées par des trames TCP reçues par le dispositif d'interconnexion via lesdites connexions.

4. Procédé d'interconnexion selon la revendication 1, 2 ou 3, **caractérisé en ce que** le dispositif d'interconnexion effectue les étapes suivantes :
- vérifier si le numéro de port effectif d'un serveur est déjà attribué par le dispositif d'interconnexion à un autre serveur ;
- attribuer au serveur le même numéro de port que ledit numéro de port effectif, en cas de vérification positive ;
- attribuer au serveur un autre numéro de port, sinon.

5. Procédé d'interconnexion selon l'une quelconque des revendications 1 à 4, **caractérisé en ce que** le dispositif d'interconnexion analyse (406) un en-tête HTTP dans les trames reçues par le dispositif d'interconnexion via une desdites connexions, et **en ce que** le dispositif d'interconnexion n'effectue de modification de trame que si le champ CONTENT-TYPE de l'en-tête HTTP est de type texte.

6. Procédé d'interconnexion selon l'une quelconque des revendications 1 à 5, **caractérisé en ce que** le dispositif d'interconnexion analyse un en-tête HTTP dans les trames reçues par le dispositif d'interconnexion via une desdites connexions, et **en ce que**, si le champ HOST est présent dans l'en-tête HTTP, le dispositif d'interconnexion effectue les étapes suivantes :
- si l'adresse IP contenue dans le champ HOST est une adresse de serveur, remplacer ladite adresse IP par une adresse IP du dispositif d'interconnexion, utilisable pour router les données sur l'autre sous-réseau que celui auquel ledit serveur est connecté parmi lesdits premier et second sous-réseaux, et
- si l'adresse IP contenue dans le champ HOST est une adresse IP du dispositif d'interconnexion, remplacer ladite adresse IP par l'adresse IP du serveur avec lequel une dite connexion est établie et qui est connecté sur l'autre sous-réseau que celui duquel lesdites trames sont reçues parmi lesdits premier et second sous-réseaux.

7. Procédé d'interconnexion selon l'une quelconque des revendications 1 à 6, **caractérisé en ce que**, après avoir établi lesdites connexions, le dispositif d'interconnexion effectue les étapes suivantes :
- activer une temporisation de durée prédéfinie ;
- vérifier si au moins une trame est reçue par le dispositif d'interconnexion via au moins l'une desdites connexions ; et
- fermer lesdites connexions lorsqu'aucune trame n'a été reçue par le dispositif d'interconnexion via au moins l'une desdites connexions avant expiration de ladite temporisation.

8. Procédé d'interconnexion selon la revendication 7, **caractérisé en ce que** le dispositif d'interconnexion ferme en outre lesdites connexions lorsque ledit dispositif d'interconnexion reçoit, via l'une des connexions, une requête de fermeture de connexion pour ladite connexion.

9. Dispositif d'interconnexion (111) destiné à interconnecter des premier et second sous-réseaux, ledit premier sous-réseau étant un réseau local (101) sur lequel est connectée une passerelle internet reliant ledit premier sous-réseau à un troisième sous-réseau (110), ledit second sous-réseau étant une femto-cellule (102), lesdits premier et second sous-réseaux étant adaptés pour permettre d'y connecter des dispositifs UPnP (130 ; 140), chaque dispositif UPnP comportant au moins un serveur associé à une adresse IP et un numéro de port, le dispositif d'interconnexion comportant des moyens mis en oeuvre lorsque le dispositif d'interconnexion détecte la présence d'un terminal mobile UPnP dans la femto-cellule comprenant :
des moyens pour s'abonner, sur chacun des premier et second sous-réseaux, à une adresse IP et un numéro de port prédéfinis auxquels sont adressés des datagrammes UDP multicast transmis lors d'une phase de découverte UPnP ;
des moyens pour se mettre en écoute de datagrammes UDP transmis à destination de ladite adresse IP du dispositif d'interconnexion et du numéro de port attribué par le dispositif d'interconnexion audit serveur ;
- des moyens pour déterminer (303 ; 309 ; 409), pour lesdits premier et second sous-réseaux, des adresses IP et numéros de port effectifs de serveurs de dispositifs UPnP ;
- des moyens pour attribuer (504) un numéro de port à chacun desdits serveurs ;
- des moyens pour établir (402), sur réception d'une requête de connexion correspondant à un numéro de port attribué par le dispositif d'interconnexion à un dit serveur, une connexion entre le dispositif d'interconnexion et ledit serveur, et une connexion entre le dispositif d'interconnexion et le dispositif UPnP ayant émis ladite requête ;
- des moyens pour recevoir au moins une trame via une desdites connexions ;
- des moyens pour remplacer (413) dans ladite trame chaque adresse IP et numéro de port effectifs de serveur appartenant au sous réseau d'émission de la dite trame par une adresse IP du dispositif d'interconnexion, utilisable pour router les données sur l'autre sous-réseau que celui auquel ledit serveur est connecté parmi lesdits premier et second sous-réseaux, et le numéro de port attribué par le dispositif d'interconnexion audit serveur,
- des moyens pour remplacer (413) dans ladite trame chaque adresse IP du dispositif d'interconnexion utilisable sur le sous réseau d'émission de ladite trame et numéro de port attribué par le dispositif d'interconnexion à un serveur par l'adresse IP et le numéro de port du serveur correspondant; et
- des moyens pour transmettre (414) ladite trame ainsi modifiée sur l'autre sous-réseau choisi parmi les premier et second sous-réseaux, le sous-réseau choisi étant celui par lequel le dispositif d'interconnexion n'a pas reçu ladite trame.

10. Dispositif d'interconnexion selon la revendication 9, **caractérisé en ce qu'**il comporte :
- un module assistant de découverte (121) adapté pour analyser et modifier des datagrammes UDP transmis par des serveurs lors d'une phase de découverte UPnP ;
- un module de translation d'adresses (122) adapté pour analyser et modifier des trames HTTP transmises par des serveurs via lesdites connexions.

11. Produit programme d'ordinateur, **caractérisé en ce qu'**il comprend des instructions pour mettre en oeuvre, par un dispositif d'interconnexion, le procédé selon l'une quelconque des revendications 1 à 8, lorsque ledit programme est exécuté par un processeur du dispositif d'interconnexion.

12. Moyens de stockage, **caractérisés en ce qu'**ils stockent un programme d'ordinateur comprenant des instructions pour mettre en oeuvre, par un dispositif d'interconnexion, le procédé selon l'une quelconque des revendications 1 à 8, lorsque ledit programme est exécuté par un processeur du dispositif d'interconnexion.

## Patentansprüche

1. Verfahren zur Verbindung eines ersten und eines zweiten Teilnetzwerks, wobei das erste Teilnetzwerk ein lokales Netzwerk (101) ist, auf dem ein Internet-Gateway angeschlossen ist, das das erste Teilnetzwerk mit einem dritten Teilnetzwerk (110) verbindet, wobei das zweite Teilnetzwerk eine Femto-Zelle (102) ist, wobei die ersten und zweiten Teilnetzwerke dazu vorgesehen sind, es zu ermöglichen, an sie UPnP-Vorrichtungen (130; 140) anzuschließen, wobei jede UPnP-Vorrichtung mindestens einen Server umfasst, der einer IP-Adresse und einer Portnummer zugeordnet ist, wobei das Verfahren derart ist, dass eine Verbindungsvorrichtung (111), die die ersten und zweiten Teilnetzwerke verbindet, die folgenden vorhergehenden Schritte ausführt, wenn die Verbindungsvorrichtung das Vorhandensein eines mobilen UPnP-Terminals in der Femto-Zelle erfasst:
- auf jedem der ersten und zweiten Teilnetzwerke Anmeldung an einer vordefinierten IP-Adresse und Portnummer, an die die Multicast-UDP-Datagramme adressiert werden, die bei einer UPnP-Erkennungsphase übertragen werden, und
- Abhören von UDP-Datagrammen, die in Richtung der IP-Adresse der Verbindungsvorrichtung übertragen werden, und der Portnummer, die von der Verbindungsvorrichtung dem Server zugeordnet wird;
dann, nach dem Einsatz der vorhergehenden Schritte, führt die Verbindungsvorrichtung aus:
- Bestimmung (303; 309; 409) für die ersten und zweiten Teilnetzwerke der effektiven IP-Adressen und Portnummern von Servern von UPnP-Vorrichtungen;
- Zuordnung (504) einer Portnummer zu jedem der Server;
- bei Empfang einer Verbindungsanfrage entsprechend einer Portnummer, die einem Server von der Verbindungsvorrichtung zugeordnet wurde, Herstellung (402) einer Verbindung zwischen der Verbindungsvorrichtung und dem Server und einer Verbindung zwischen der Verbindungsvorrichtung und der UPnP-Vorrichtung, die die Anfrage gesandt hat;
und in mindestens einem Raster, der von der Verbindungsvorrichtung über eine der Verbindungen empfangen wird:
- in dem Raster Ersatz (413) jeder effektiven IP-Adresse und Portnummer eines Servers, der dem Teilnetzwerk zum Senden des Rasters angehört, durch eine IP-Adresse der Verbindungsvorrichtung, die verwendbar ist, um die Daten auf das andere Teilnetzwerk als jenes, an das der Server angeschlossen ist, unter den ersten und zweiten Teilnetzwerken zu routen, und die Portnummer, die dem Server von der Verbindungsvorrichtung zugeordnet wurde, und
- in dem Raster Ersatz (413) jeder IP-Adresse der Verbindungsvorrichtung, die auf dem Teilnetzwerk zum Senden des Rasters verwendbar ist, und Portnummer, die einem Server von der Verbindungsvorrichtung zugeordnet wurde, durch die IP-Adresse und Portnummer des entsprechenden Servers; und
- Übertragung (414) des so veränderten Rasters auf einem Teilnetzwerk, das unter den ersten und zweiten Teilnetzwerken ausgewählt wird, wobei das ausgewählte Teilnetzwerk jenes ist, über das die Verbindungsvorrichtung den Raster nicht empfangen hat.

2. Verbindungsverfahren nach Anspruch 1, **dadurch gekennzeichnet, dass** die Verbindungsvorrichtung die effektiven IP-Adressen und Portnummern von Servern auf Basis von UDP-Datagrammen, die von den Servern bei einer UPnP-Erkennungsphase übertragen wurden, bestimmt, und dass für jedes UDP-Datagramm die Verbindungsvorrichtung die folgenden Schritte ausführt:
- Ersatz (305; 311) jeder effektiven IP-Adresse und Portnummer eines Servers, der dem Teilnetzwerk zum Senden des UDP-Datagramms angehört, durch eine IP-Adresse der Verbindungsvorrichtung, die verwendbar ist, um die Daten auf das andere Teilnetzwerk als jenes, an das der Server angeschlossen ist, unter den ersten und zweiten Teilnetzwerken zu routen, und die Portnummer, die dem Server von der Verbindungsvorrichtung zugeordnet wurde,
- Ersatz (305; 311) jeder IP-Adresse der Verbindungsvorrichtung, die auf dem Teilnetzwerk zum Senden des UDP-Datagramms verwendbar ist, und Portnummer, die einem Server von der Verbindungsvorrichtung zugeordnet wurde, durch die IP-Adresse und Portnummer des entsprechenden Servers; und
- Übertragung (306) des so veränderten UDP-Datagramms auf einem Teilnetzwerk, das unter den ersten und zweiten Teilnetzwerken ausgewählt wird, wobei das ausgewählte Teilnetzwerk jenes ist, über das die Verbindungsvorrichtung das UDP-Datagramm nicht empfangen hat.

3. Verbindungsverfahren nach Anspruch 1 oder 2, **dadurch gekennzeichnet, dass** die Verbindungsvorrichtung die effektiven IP-Adressen und Portnummern von Servern auf Basis von http-Rastern bestimmt (409), die von TCP-Rastern transportiert werden, die von der Verbindungsvorrichtung über die Verbindungen empfangen werden.

4. Verbindungsverfahren nach Anspruch 1, 2 oder 3, **dadurch gekennzeichnet, dass** die Verbindungsvorrichtung die folgenden Schritte ausführt:
- Überprüfung, ob die effektive Portnummer eines Servers bereits von der Verbindungsvorrichtung einem anderen Server zugeordnet wurde;
- Zuordnung derselben Portnummer wie die effektive Portnummer zu dem Server im Falle einer positiven Überprüfung;
- andernfalls Zuordnung einer anderen Portnummer zu dem Server.

5. Verbindungsverfahren nach einem der Ansprüche 1 bis 4, **dadurch gekennzeichnet, dass** die Verbindungsvorrichtung eine http-Kopfzeile in den von der Verbindungsvorrichtung über die Verbindungen empfangenen Rastern analysiert (406), und dass die Verbindungsvorrichtung eine Rasteränderung nur dann vornimmt, wenn das Feld CONTENT-TYPE der http-Kopfzeile vom Texttyp ist.

6. Verbindungsverfahren nach einem der Ansprüche 1 bis 5, **dadurch gekennzeichnet, dass** die Verbindungsvorrichtung eine http-Kopfzeile in den von der Verbindungsvorrichtung über die Verbindungen empfangenen Rastern analysiert, und dass, wenn das HOST-Feld in der http-Kopfzeile vorhanden ist, die Verbindungsvorrichtung die folgenden Schritte ausführt:
- wenn die in dem HOST-Feld enthaltene IP-Adresse eine Serveradresse ist, Ersatz der IP-Adresse durch eine IP-Adresse der Verbindungsvorrichtung, die verwendbar ist, um die Daten auf das andere Teilnetzwerk als jenes, an das der Server angeschlossen ist, unter den ersten und zweiten Teilnetzwerken zu routen, und
- wenn die in dem HOST-Feld enthaltene IP-Adresse eine IP-Adresse der Verbindungsvorrichtung ist, Ersatz der IP-Adresse durch die IP-Adresse des Servers, mit dem eine Verbindung hergestellt ist, und der an das andere Teilnetzwerk als jenes, von dem die Raster empfangen werden, unter den ersten und zweiten Teilnetzwerken angeschlossen ist.

7. Verbindungsverfahren nach einem der Ansprüche 1 bis 6, **dadurch gekennzeichnet, dass**, nachdem die Verbindungen hergestellt wurden, die Verbindungsvorrichtung die folgenden Schritte ausführt:
- Aktivierung einer Verzögerung von vordefinierter Dauer;
- Überprüfung, ob mindestens ein Raster von der Verbindungsvorrichtung über mindestens eine der Verbindungen empfangen wird; und
- Schließen der Verbindungen, wenn kein Raster von der Verbindungsvorrichtung über mindestens eine der Verbindungen vor Ablauf der Verzögerung empfangen wird.

8. Verbindungsverfahren nach Anspruch 7, **dadurch gekennzeichnet, dass** die Verbindungsvorrichtung ferner die Verbindungen schließt, wenn die Verbindungsvorrichtung über eine der Verbindungen eine Anfrage nach Schließen einer Verbindung für die Verbindung empfängt.

9. Verbindungsvorrichtung (111), die dazu bestimmt ist, erste und zweite Teilnetzwerke zu verbinden, wobei das erste Teilnetzwerk ein lokales Netzwerk (101) ist, auf dem ein Internet-Gateway angeschlossen ist, das das erste Teilnetzwerk mit einem dritten Teilnetzwerk (110) verbindet, wobei das zweite Teilnetzwerk eine Femto-Zelle (102) ist, wobei die ersten und zweiten Teilnetzwerke dazu vorgesehen sind, es zu ermöglichen, an sie UPnP-Vorrichtungen (130; 140) anzuschließen, wobei jede UPnP-Vorrichtung mindestens einen Server umfasst, der einer IP-Adresse und einer Portnummer zugeordnet ist, wobei die Verbindungsvorrichtung Einsatzmittel umfasst, wenn die Verbindungsvorrichtung das Vorhandensein eines mobilen UPnP-Terminals in der Femto-Zelle erfasst, umfassend:
- Mittel, um sich auf jedem der ersten und zweiten Teilnetzwerke an einer vordefinierten IP-Adresse und Portnummer anzumelden, an die die Multicast-UDP-Datagramme adressiert werden, die bei einer UPnP-Erkennungsphase übertragen werden,
- Mittel, um UDP-Datagrammen, die in Richtung der IP-Adresse der Verbindungsvorrichtung übertragen werden, und die Portnummer, die von der Verbindungsvorrichtung dem Server zugeordnet wird, abzuhören;
- Mittel zur Bestimmung (303; 309; 409) für die ersten und zweiten Teilnetzwerke der effektiven IP-Adressen und Portnummern von Servern von UPnP-Vorrichtungen;
- Mittel zur Zuordnung (504) einer Portnummer zu jedem der Server;
- bei Empfang einer Verbindungsanfrage entsprechend einer Portnummer, die einem Server von der Verbindungsvorrichtung zugeordnet wurde, Mittel zur Herstellung (402) einer Verbindung zwischen der Verbindungsvorrichtung und dem Server und einer Verbindung zwischen der Verbindungsvorrichtung und der UPnP-Vorrichtung, die die Anfrage gesandt hat;
- Mittel zum Empfang mindestens eines Rasters über eine der Verbindungen;
- in dem Raster Mittel zum Ersatz (413) jeder effektiven IP-Adresse und Portnummer eines Servers, der dem Teilnetzwerk zum Senden des Rasters angehört, durch eine IP-Adresse der Verbindungsvorrichtung, die verwendbar ist, um die Daten auf das andere Teilnetzwerk als jenes, an das der Server angeschlossen ist, unter den ersten und zweiten Teilnetzwerken zu routen, und die Portnummer, die dem Server von der Verbindungsvorrichtung zugeordnet wurde, und
- in dem Raster Mittel zum Ersatz (413) jeder IP-Adresse der Verbindungsvorrichtung, die auf dem Teilnetzwerk zum Senden des Rasters verwendbar ist, und Portnummer, die einem Server von der Verbindungsvorrichtung zugeordnet wurde, durch die IP-Adresse und Portnummer des entsprechenden Servers; und
- Mittel zur Übertragung (414) des so veränderten Rasters auf dem anderen Teilnetzwerk, das unter den ersten und zweiten Teilnetzwerken ausgewählt wird, wobei das ausgewählte Teilnetzwerk jenes ist, über das die Verbindungsvorrichtung den Raster nicht empfangen hat.

10. Verbindungsvorrichtung nach Anspruch 9, **dadurch gekennzeichnet, dass** sie umfasst:
- ein Assistenzerkennungsmodul (121), das dazu vorgesehen ist, UDP-Datagramme, die von Servern bei einer UPnP-Erkennungsphase übertragen werden, zu analysieren und zu verändern;
- ein Adresstranslationsmodul (122), das dazu vorgesehen ist, http-Raster, die von Servern über die Verbindungen übertragen werden, zu analysieren und zu verändern.

11. Computerprogrammprodukt, **dadurch gekennzeichnet, dass** es Anweisungen umfasst, um durch eine Verbindungsvorrichtung das Verfahren nach einem der Ansprüche 1 bis 8 einzusetzen, wenn das Programm von einem Prozessor der Verbindungsvorrichtung ausgeführt wird.

12. Speichermittel, **dadurch gekennzeichnet, dass** sie ein Computerprogramm speichern, umfassend Anweisungen, um durch eine Verbindungsvorrichtung das Verfahren nach einem der Ansprüche 1 bis 8 einzusetzen, wenn das Programm von einem Prozessor der Verbindungsvorrichtung ausgeführt wird.

## Claims

1. Interconnection method for interconnecting first and second sub-networks, the said first sub-network being a local network (101) on which is connected an internet gateway linking the said first sub-network to a third sub-network (110), the said second sub-network being a femto-cell (102), the said first and second sub-networks being adapted to allow UPnP devices (130; 140) to be connected thereto, each UPnP device comprising at least one server associated with an IP address and a port number, the method being such that an interconnection device (111) interconnecting the said first and second sub-networks performs the following prior steps when the interconnection device detects the presence of a UPnP mobile terminal in the femto-cell:
- subscribing, on each of the first and second sub-networks, to a predefined IP address and a predefined port number to which are addressed multicast UDP datagrams transmitted during a UPnP discovery phase, and
- starting to listen for UDP datagrams transmitted to the said IP address of the interconnection device and the port number allocated by the interconnection device to the said server;
then; following the implementation of the prior steps, the interconnection device performs:
- determining (303; 309; 409), for the said first and second sub-networks, actual IP addresses and port numbers of servers of UPnP devices;
- allocating (504) a port number to each of the said servers;
- establishing (402), on receipt of a connection request corresponding to a port number allocated by the interconnection device to a said server, a connection between the interconnection device and the said server, and a connection between the interconnection device and the UPnP device that emitted the said request;
and in at least one frame, received by the interconnection device via one of the said connections:
- replacing (413) in the said frame each actual IP address and actual port number of a server belonging to the sub-network of emission of the said frame with an IP address of the interconnection device, usable to route the data over the other sub-network than that to which the said server is connected from among the said first and second sub-networks, and the port number allocated by the interconnection device to the said server, and
- replacing (413) in the said frame each IP address of the interconnection device usable on the sub-network of emission of the said frame and port number allocated by the interconnection device to a server with the IP address and the port number of the corresponding server; and
- transmitting (414) the said frame thus modified on a sub-network chosen from among the first and second sub-networks, the sub-network chosen being that through which the interconnection device has not received the said frame.

2. Interconnection method according to Claim 1, **characterized in that** the interconnection device determines the actual IP addresses and port numbers of servers on the basis of UDP datagrams transmitted by said servers during a UPnP discovery phase, and **in that**, for each said UDP datagram, the interconnection device performs the following steps:
- replacing (305; 311) each actual IP address and actual port number of a server belonging to the sub-network of emission of the said UDP datagram with an IP address of the interconnection device, usable to route the data over the other sub-network than that to which the said server is connected from among the said first and second sub-networks, and the port number allocated by the interconnection device to the said server,
- replacing (305; 311) each IP address of the interconnection device usable on the sub-network of emission of the said UDP datagram and port number allocated by the interconnection device to a server with the IP address and the port number of the corresponding server, and
- transmitting (306) each UDP datagram thus modified on a sub-network chosen from among the first and second sub-networks, the sub-network chosen being that through which the interconnection device has not received the said UDP datagram.

3. Interconnection method according to Claim 1 or 2, **characterized in that** the interconnection device determines (409) the actual IP addresses and port numbers of servers on the basis of HTTP frames transported by TCP frames received by the interconnection device via the said connections.

4. Interconnection method according to Claim 1, 2 or 3, **characterized in that** the interconnection device performs the following steps:
- verifying whether the actual port number of a server is already allocated by the interconnection device to another server;
- allocating to the server the same port number as the said actual port number, in case of positive verification;
- allocating to the server another port number, otherwise.

5. Interconnection method according to any one of Claims 1 to 4, **characterized in that** the interconnection device analyses (406) an HTTP header in the frames received by the interconnection device via one of the said connections, and **in that** the interconnection device performs no frame modification unless the CONTENT-TYPE field of the HTTP header is of text type.

6. Interconnection method according to any one of Claims 1 to 5, **characterized in that** the interconnection device analyses an HTTP header in the frames received by the interconnection device via one of the said connections, and **in that**, if the HOST field is present in the HTTP header, the interconnection device performs the following steps:
- if the IP address contained in the HOST field is a server address, replacing the said IP address with an IP address of the interconnection device, usable to route the data over the other sub-network than that to which the said server is connected from among the said first and second sub-networks, and
- if the IP address contained in the HOST field is an IP address of the interconnection device, replacing the said IP address with the IP address of the server with which a said connection is established and which is connected on the other sub-network than that from which the said frames are received from among the said first and second sub-networks.

7. Interconnection method according to any one of Claims 1 to 6, **characterized in that**, after having established the said connections, the interconnection device performs the following steps:
- activating a timeout of predefined duration;
- verifying whether at least one frame is received by the interconnection device via at least one of the said connections; and
- closing the said connections when no frame has been received by the interconnection device via at least one of the said connections before expiry of the said timeout.

8. Interconnection method according to Claim 7, **characterized in that** the interconnection device furthermore closes the said connections when the said interconnection device receives, via one of the connections, a connection closure request in respect of the said connection.

9. Interconnection device (111) intended to interconnect first and second sub-networks, the said first sub-network being a local network (101) on which is connected an internet gateway linking the said first sub-network to a third sub-network (110), the said second sub-network being a femto-cell (102), the said first and second sub-networks being adapted to allow UPnP devices (130; 140) to be connected thereto, each UPnP device comprising at least one server associated with an IP address and a port number, the interconnection device comprising means implemented when the interconnection device detects the presence of a UPnP mobile terminal in the femto-cell comprising:
means for subscribing, on each of the first and second sub-networks, to a predefined IP address and a predefined port number to which are addressed multicast UDP datagrams transmitted during a UPnP discovery phase;
means for starting to listen for UDP datagrams transmitted to the said IP address of the interconnection device and the port number allocated by the interconnection device to the said server;
- means for determining (303; 309; 409), for the said first and second sub-networks, actual IP addresses and port numbers of servers of UPnP devices;
- means for allocating (504) a port number to each of the said servers;
- means for establishing (402), on receipt of a connection request corresponding to a port number allocated by the interconnection device to a said server, a connection between the interconnection device and the said server, and a connection between the interconnection device and the UPnP device that emitted the said request;
- means for receiving at least one frame via one of the said connections;
- means for replacing (413) in the said frame each actual IP address and actual port number of a server belonging to the sub-network of emission of the said frame with an IP address of the interconnection device, usable to route the data over the other sub-network than that to which the said server is connected from among the said first and second sub-networks, and the port number allocated by the interconnection device to the said server,
- means for replacing (413) in the said frame each IP address of the interconnection device usable on the sub-network of emission of the said frame and port number allocated by the interconnection device to a server with the IP address and the port number of the corresponding server; and
- means for transmitting (414) the said frame thus modified on the other sub-network chosen from among the first and second sub-networks, the sub-network chosen being that through which the interconnection device has not received the said frame.

10. Interconnection device according to Claim 9, **characterized in that** it comprises:
- a discovery-assisting module (121) adapted to analyse and modify UDP datagrams transmitted by servers during a UPnP discovery phase;
- an address translation module (122) adapted to analyse and modify HTTP frames transmitted by servers via the said connections.

11. Computer program product, **characterized in that** it comprises instructions for implementing, by an interconnection device, the method according to any one of Claims 1 to 8, when the said program is executed by a processor of the interconnection device.

12. Storage means, **characterized in that** they store a computer program comprising instructions for implementing, by an interconnection device, the method according to any one of Claims 1 to 8, when the said program is executed by a processor of the interconnection device.
